# Europäisches Patentamt
# European Patent Office
# Office européen des brevets

(11) Publication number: **0 074 655**
**B1**

(12) **EUROPEAN PATENT SPECIFICATION**

(45) Date of publication of patent specification: **26.02.86**

(21) Application number: **82108434.0**

(22) Date of filing: **13.09.82**

(51) Int. Cl.⁴: **C 03 C 13/00, C 03 C 3/04, C 04 B 35/14 // C04B35/68**

(54) **Heat resistant inorganic fiber.**

(30) Priority: **14.09.81 JP 145010/81**
**12.07.82 JP 119911/82**

(43) Date of publication of application:
**23.03.83 Bulletin 83/12**

(45) Publication of the grant of the patent:
**26.02.86 Bulletin 86/09**

(84) Designated Contracting States:
**DE FR GB**

(56) References cited:
**GB-A-1 087 142**
**US-A-3 449 137**
**US-A-4 180 409**

(73) Proprietor: **TOSHIBA MONOFRAX COMPANY LTD.**
**20-8, Aza-Hachimandaira Takeda Koozaki-machi Katori-gum Chiba-ken (JP)**

(72) Inventor: **Misu, Yasuo**
**1307 Koori Koozaki-machi**
**Katori-gun Chiba-ken (JP)**
Inventor: **Hirata, Kimio**
**1010 Oonuki Koozaki-machi**
**Katori-gun Chiba-ken (JP)**
Inventor: **Endo, Shigeo**
**1-17-2, Tamatsukuri**
**Narita-shi Chiba-ken (JP)**
Inventor: **Arai, Kenji**
**2-2-1, karabe**
**Narita-shi Chiba-ken (JP)**
Inventor: **Ito, Akira**
**1-15-20, Makuhari-nishi**
**Chiba-shi Chiba-ken (JP)**

(74) Representative: **Kinzebach, Werner, Dr. et al**
**Patentanwälte Reitstötter, Kinzebach und Partner Postfach 780**
**D-8000 München 43 (DE)**

Courier Press, Leamington Spa, England.

## Description

The present invention relates to a high-temperature resistant inorganic fiber. Most typical heat-resistant inorganic fiber is so-called ceramic fiber consisting of alumina and silica and having an average diameter of about 3 μm.

In order to save oil, energy conservation measures have been taken in various types of industrial furnaces. With this trend, ceramic fiber has been recently adopted in furnace walls with considerably satisfactory results. However, furnace walls made of ceramic fiber are also subject to drawbacks such as layer separation, joint separation, cracking, and partial or overall destruction of furnace walls or ceilings. In an attempt to search for causes of these drawbacks, it has been found that the heat resistance of the ceramic fiber used does not meet the working level or in other words the working conditions are too severe for the ceramic fiber. Since the ceramic fiber is a glassy material, it is transformed into stable crystalline structure upon being heated. With this transformation, the fiber shrinks and degrades in mechanical strength, resulting in shrinkage and degradation in resiliency of a ceramic fiber product which is a collective body of the fiber. Various articles and literatures have been published on this subject. Just to show an example, such a phenomenon is shown in Leonard E. Olds, William C. Miller, John M. Pallo, "High Temperature Alumina-Silicate Fibers Stabilized with $Cr_2O_3$", Ceramic Bulletin, *59*, 7, pp. 739 to 741, 1980. In this publication, Olds et al made a comparison between a conventional alumina-silicate ceramic fiber and a ceramic fiber (chromia-stabilized ceramic fiber) containing 3 to 4% of chromia. They made an analysis of the change in quality of the ceramic fibers, the stabilizing function of chromia, and the effects obtained from addition of chromia (prevention of sintering). Although the chromia-stabilized alumina-silicate ceramic fiber which Olds et al used as the subject of an experiment is superior in its heat resistance to the conventional ceramic fiber, it still does not meet the working conditions at the industrial site.

In order of provide a solution to this problem, the present inventors have made extensive studies. The present inventors first realized that quartz glass does not suffer much viscosity degradation at high temperatures and is more stable against heat than other heat-resistant glasses. In view of this, the present inventors searched for a suitable additive to take the place of alumina. As a result of these studies it has been found that a heat-resistant fiber which is equivalent or superior in its heat resistance to the conventional ceramic fiber may be prepared from a raw material composition consisting of quartz glass with an oxide of zirconium or vanadium. Furthermore, this heat-resistant fiber can be prepared in similar steps and by similar apparatuses as are adopted in the manufacture of conventional ceramic fibers. The present invention has thus been established.

U.S. Patent 2,873,197 discloses easy manufacture of fiber by the spinning method by addition of zirconia ($ZrO_2$). This method uses a raw material composition consisting of 40 to 60% by weight of silica, 20 to 45% by weight of alumina, and 3.5 to 20% by weight of zirconia. However, this composition is based on $Al_2O_3$—$SiO_2$ and is essentially different from the composition of the present invention which is based on quartz glass with $ZrO_2$ added thereto.

The GB—A—1 087 142 describes glass fibers comprising among other materials 53 to 73% by weight silicon dioxide and 4 to 12% by weight iron oxide.

The US—A—4 180 409 discloses quartz glass fibers of high thermal stability containing chromium oxide or manganese oxide.

These documents, however, do not teach the use of vanadium or zirconium oxides for the manufacture of inorganic fibers.

It is an object of the present invention to provide an inorganic fiber which is excellent in heat resistance and which undergoes only small changes (or shrinkage) in fiber length at high temperatures.

In order to achieve the above object of the present invention, there is provided a heat-resistant inorganic fiber which consists essentially of not less than 4 mol% of at least one member selected from the group consisting of oxides of vanadium and zirconium and 70 to 90 mol% of silica.

Consequently, the basic composition of the inorganic fiber of the present invention includes silica as the first component and at least one oxide of a metal of vanadium or zirconium as the second component. Preferably, a third component may be present consisting of at least one oxide of iron, cobalt, nickel, chromium and manganese. In addition, a fourth component consisting of an inorganic material which does not interfere with vitrification such as at least one metal oxide selected from calcium oxide (CaO), magnesium oxide (MgO), titanium dioxide ($TiO_2$), aluminium oxide ($Al_2O_3$) and phosphorus pentoxide ($P_2O_5$) may be present as well.

The metal oxide as the second component must be contained in the amount of not less than 4 mol% and preferably 5 mol%. The addition of the second component significantly improves heat resistance of the fiber and renders the molten silica electrically conductive. Molten silica exhibits a large electrical resistance. However, addition of a metal oxide as the second component as described above renders the mixture electrically conductive and facilitates melting in an electric furnace.

Silica is contained in the amount of 70 to 90 mol% and preferably 75 to 85 mol%. If the amount of silica is less than 70 mol%, it will be deviated from the basic glass phase of quartz glass. The resultant increase of the other components inevitably gives glass of poor heat-resistivity and degraded stability. Then, the metal oxide tends to crystallize, resulting in formation of a large amount of shots (or unfiberized granule) and degradation in the manufacturing yield of the fiber. On the other hand, if the amount of silica exceeds 90 mol%, the viscosity of the molten silica increases to prevent the molten silica from flowing out of the electric furnace.

In contrast to this, in the fiber of the present invention, most of the metal oxide is part of the glass at ambient temperature and prior to heating, or is dissolved in the liquid phase in the quartz glass. Only a small amount of metal oxide remains in the solid phase. For this reason, the fourth component which does not significantly degrade the heat resistance of the glass may be added to the raw material composition for stabilizing the glass consisting of silica and the metal oxide.

Examples of particularly preferable compositions according to the present invention may include $SiO_2$—$ZrO_2$—$Al_2O_3$—FeO.

The raw material mixture of the mixing ratio as described above is prepared into a fiber according to the method for manufacturing a conventional ceramic fiber. More specifically, the raw materials are melted in an electric furnace of a structure as disclosed in U.S. Patent 2,686,821, and the molten mixture flowing out of a gate is blown by air or vapor using a nozzle disclosed in U.S. Patent 3,476,324 to prepare the fiber.

The composition of the fiber according to the present invention as described above has superior heat resistance to that of the conventional ceramic fiber or the alumina-silicate ceramic fiber contining chromia which is disclosed in U.S. Patent 3,449,137.

This invention can be more fully understood from the following detailed description when taken in conjunction with the accompanying drawings, in which:

Fig 1 is a graph showing the rate of change (%) in the fiber length as a function of changes in temperature of the ceramic fiber according to example 1 of the present invention; and

Figs. 2A and 2B are graphs showing the rate of change (%) in the fiber length as a function of changes in temperature of the ceramic fiber according to a further example of the present invention.

The present invention will now be described by way of its examples. The tests conducted to confirm the effects of the present invention were the simple heat resistance test using a gas cigarette lighter, measurement of the rate of change in the fiber length, and the thermal linear shrinkage test of a blanket. In the simple heat resistance test using a gas cigarette lighter, a heat-resistant fiber is brought into direct contact with the flame of the cigarette lighter. All of the conventional alumina-silicate ceramic fibers shrink from the fiber ends and disappear from the sight. Therefore, the quality of the fibers according to the present invention and the prior art may be readily determined. According to the measurement of the rate of change in the fiber length, one fiber is heated at gradually increasing temperatures and expansion and shrinkage of the fiber are measured. In this case, a platinum wire is used as a support wire for suspending the fiber. A fiber with shots attached to its distal end is selected so as to suspend the fiber substantially vertically. The shots serve as a weight. If the fiber selected does not have such shots, fine powder of ceramic fiber is suspended in a colloidal silica solution, and one drop of the resultant coating cement is attached to the distal end of the fiber and is dried. In the thermal linear shrinkage test of a blanket, part of the fiber sample is stirred with water to remove most of the shots and is used to prepare blankets according to the conventional method. Then the thermal linear shrinkage is measured. Examples will now be described.

### Example 1
(Vanadium pentoxide is used as the metal oxide)

Used as raw materials were Australian Fremantle siliceous sand as a silica source, "A—21" (trade mark) manufactured by SUMITOMO CHEMICAL CO., LTD. as alumina, and other industrially available chemicals.

The raw materials as described above were melted in an electric furnace having a gate of 25 mm width. The electric furnace was inclined to gradually flow the resultant molten material which was blown with compressed air from a nozzle disclosed in U.S. Patent 3,426,324. The compressed air had a pressure of 750 kg/cm$^2$, and was fed at a rate of 10 m$^3$/min. The prepared fiber was collected in a fiber collection chamber defined by metal nets. The amount of fiber shots was relatively small. The results of X-ray diffractiometry confirmed no presence of crystalline structure. Part of the fiber was brought into contact with the flame of a cigarette lighter. If no shrinkage was observed with the naked eye, the fiber was determined to be "excellent" (this also applies to the subsequent examples). If shrinkage was observed but was significantly smaller than that obtainable with the conventional ceramic fiber, the fiber was determined to be "good" (this also applies to the subsequent examples). Measurements were also made of the softening point, the blanket shrinkage and so on.

A fiber with 89.2 mol% $SiO_2$ and 10.8 mol% $V_2O_5$ was evaluated "excellent" in the Gas Cigarette Lighter Test. The softening point was 1440°C.

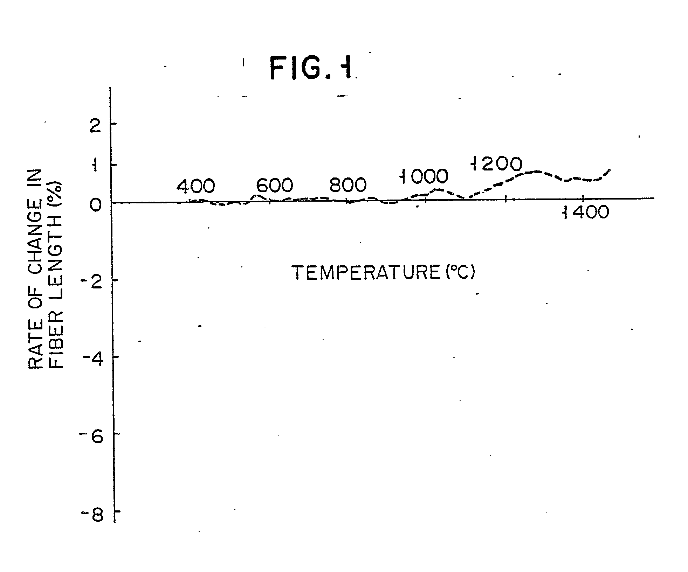

The rate of change in the fiber length is shown in Figure 1.

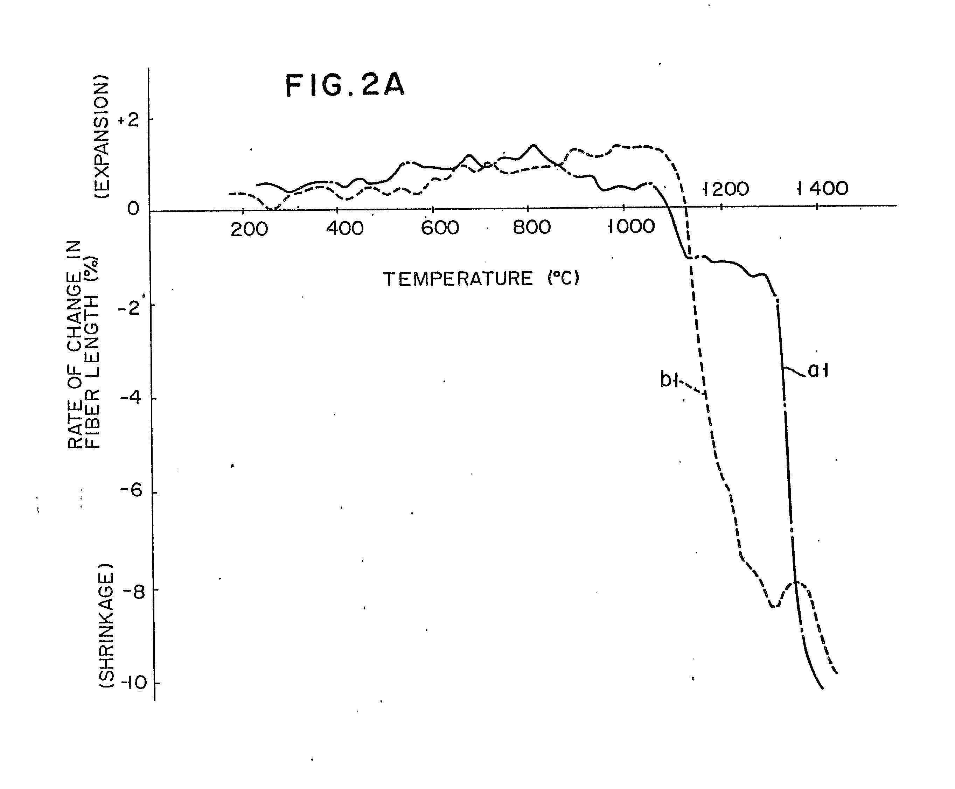

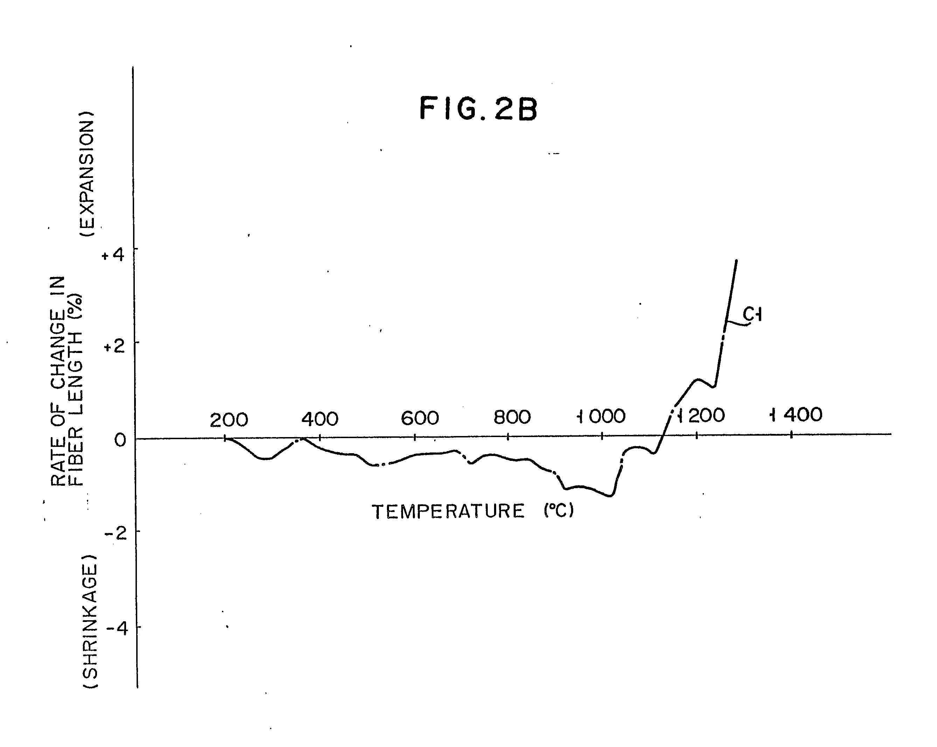

### Example 2
The raw materials of the composition as shown in Table 1 below were used and the same procedure as in Example 1 was followed to prepare a fiber. The resultant fiber was subjected to the same tests as in Example 1. The obtained results are shown in Table 1 below. In b1 (Comparative Example), since the amount of silica was less than 70 mol%, the simple cigarette lighter test provided unsatisfactory results. The rate of change in fiber length of each fiber (a1, b1 and c1) is shown in Figs. 2A and 2B.

TABLE I

| Test No. | ZrO$_2$ (mol%) | FeO (mol%) | SiO$_2$ (mol%) | P$_2$O$_5$ (mol%) | Al$_2$O$_3$ (mol%) | CaO (mol%) | Cr$_2$O$_3$ (mol%) | Gas Cigarette Lighter Test | Softening Point (°C) | Blanket Shrinkage* (%) |
|---|---|---|---|---|---|---|---|---|---|---|
| a1 | 21.9 | 4.2 | 70.3 | — | 3.6 | — | — | Good | 1,300 | 3.0 |
| b1 | 22.7 | 4.2 | 65.2 | — | 5.6 | 2.3 | — | Poor | 1,100 | 4.8 |
| c1 | 9.7 | 5.4 | 79.1 | — | 5.8 | — | — | Good | 1,280 or higher | 2.5 |
| d1 | 4.1 | 5.0 | 81.2 | — | — | 2.0 | 4.5 | Good | 1,300 | 2.5 |
| e1 | 11.4 | — | 79.2 | — | 4.2 | — | 5.2 | Good | 1,300 | 2.3 |
| f1 | 17.7 | — | 74.1 | 5.2 | — | 3.0 | — | Good | 1,250 | 2.7 |

*1400°C for 24 hours

## Claims

1. A high-temperature resistant inorganic fiber, consisting essentially of not less than 4 mol% of at least one member selected from the group consisting of oxides of vanadium (V) and zirconium (Zr); and 70 to 90 mol% of silica.

2. A high-temperature resistant inorganic fiber according to claim 1, characterized in that the silica is present in the range of 75 to 85 mol%.

3. A high-temperature resistant inorganic fiber according to claim 1 or 2, characterized in that it further comprsies at least one number selected from the group consisting of oxides of iron (Fe), cobalt (Co), nickel (Ni), chrome (Cr) and manganese (Mn).

4. A high-temperature resistant inorganic fiber according to one of the preceding claims, characterized in that it further comprises at least one member selected from the group consisting of calcium oxide (CaO), magnesium oxide (MgO), titanium dioxide ($TiO_2$), aluminum oxide ($Al_2O_3$), and phosphorus pentoxide ($P_2O_5$).

## Patentansprüche

1. Hochtemperaturbeständige anorganische Faser, die im wesentlichen aus nicht weniger als 4 Mol-% mindestens eines Bestandteiles ausgewählt aus der Gruppe bestehend aus Vanadium (V)- und Zirkon (Zr)- Oxiden und 70 bis 90 Mol-% Siliciumdioxid besteht.

2. Hochtemperaturbeständige anorganische Faser nach Anspruch 1, dadurch gekennzeichnet, daß das Silicium-dioxid in einem Antiel von 75 bis 85 Mol-% vorhanden ist.

3. Hochtemperaturbeständige anorganische Faser nach Anspruch 1 oder 2, dadurch gekennzeichnet, daß sie außerdem mindestens einen Bestandteil ausgewählt aus der Gruppe bestehend aus Eisen (Fe)-, Kobalt (Co)-, Nickel (Ni)-, Chrom (Cr)- und Mangan (Mn)-Oxiden enthält.

4. Hochtemperaturbeständige anorganische Faser nach einem der vorhergehenden Ansprüche, dadurch gekennzeichnet, daß die außerdem mindestens einen Bestandteil ausgewählt aus der Gruppe bestehend aus Calcium-oxid (CaO), Magnesiumoxid (MgO), Titandioxid ($TiO_2$), Aluminiumoxid ($Al_2O_3$) und Phosphorpentoxid ($P_2O_5$) enthält.

## Revendications

1. Une fibre inorganique résistant aux températures élevées, consistant essentiellement en un minimum de 4 mol% d'au moins un composé choisi dans le groupe consistant en les oxydes du vanadium (V) et du zirconium (Zr), et 70 à 90 mol% de silice.

2. Une fibre inorganique résistant aux températures élevées selon la revendication 1, caractérisée en ce que la silice est présente en proportion de 75 à 85 mol%.

3. Une fibre inorganique résistant aux températures élevées selon la revendication 1 ou 2, caractérisé en ce qu'elle contient en outre au moins un composé choisi dans le groupe consistant en les oxydes du fer (Fe), du cobalt (Co), du nickel (Ni), du chrome (Cr) et du manganèse (Mn).

4. Une fibre inorganique résistant aux températures élevées selon l'une des revendications qui précèdent, caractérisée en ce qu'elle contient en outre au moins un composé choisi dans le groupe consistant en l'oxyde de calcium (CaO), l'oxyde de magnésium (MgO), le dioxyde de titane ($TiO_2$), l'alumine ($Al_2O_3$) et l'oxyde de phosphore ($P_2O_5$).

# FIG. 1

FIG.2A

0 074 655

FIG.2B